## Europäisches Patentamt
## European Patent Office
## Office européen des brevets

(19)

(11) Veröffentlichungsnummer: **0 286 947**
**B1**

(12)

# EUROPÄISCHE PATENTSCHRIFT

(45) Veröffentlichungstag der Patentschrift:
26.09.90

(21) Anmeldenummer: 88105402.7

(22) Anmeldetag: 05.04.88

(51) Int. Cl.⁵: **F16K 17/04, F16K 47/00**

(54) Armatur.

(30) Priorität: 14.04.87 DE 3712186

(43) Veröffentlichungstag der Anmeldung:
19.10.88 Patentblatt 88/42

(45) Bekanntmachung des Hinweises auf die Patenterteilung:
26.09.90 Patentblatt 90/39

(84) Benannte Vertragsstaaten:
AT BE CH DE ES FR LI NL

(56) Entgegenhaltungen:
EP-A- 0 089 402
FR-A- 1 386 170
US-A- 3 048 188
US-A- 3 848 632

(73) Patentinhaber: Siemens Aktiengesellschaft,
Wittelsbacherplatz 2, D-8000 München 2(DE)

(72) Erfinder: Holtfoth, Peter, Cosimastrasse 16,
D-8520 Erlangen(DE)
Erfinder: Zill, Heinrich, Johann-Gottlieb-Fichte-Weg 10,
D-8502 Zirndorf(DE)

ACTORUM AG

## Beschreibung

Die Erfindung betrifft eine Armatur mit einem Armaturengehäuse, zwei Anschlußstutzen für eine Zuflußleitung und für eine Abströmleitung, mit einem auf einen Sitz aufsetzbaren Absperrelement, das mit gegen den Mediumdruck wirkenden mechanischen Federmitteln verbunden ist und mit einer federkraftbetätigten mechanischen Bremse, die aus zwei zusammenwirkenden Reibelementen besteht und die in Hubrichtung spielfrei bewegbar ist, wobei die infolge der Reibung entstehende Bremskraft proportional zur einwirkenden Federkraft ist.

Eine solche Armatur ist aus der EP-A 89 402 bekannt. Dort ist eine eigene Hilfsfeder vorgesehen, wobei das Gehäuse selbst nicht als eines der beiden Reibelemente dient.

Weiterhin zeigt die US-A 3 848 632 eine Dämpfungseinrichtung, bei der ein Fluiddruck auf einen O-Ring wirkt und diesen in Reibkontakt mit dem Armaturengehäuse bringt.

Derartige Armaturen werden als Sicherheitsventil, Steuerventil, Überströmventil, Reduzierventil und Rückschlagventil eingesetzt. Auch eine Verwendung als Druckreduzierventil ist bekannt. Es steht stets eine Federkraft mit einer hydraulischen Kraft, die vom Medium ausgeht, im Gleichgewicht. Falls die hydraulische Kraft sich ändert, paßt sich die Federkraft über Veränderung des Federweges an. Folglich ändert sich durch eine Verschiebung des Absperrelementes der Durchflußquerschnitt in der Armatur.

Durch Druckschwankungen in einem Rohrleitungssystem, in das die Armatur eingefügt ist, können in der Armatur bei Resonanz Schwingungen des Feder-Masse-Systems, das sich aus der Feder und dem Medium zusammensetzt, angeregt werden. Solche Schwingungen können zu Beschädigungen im Rohrleitungssystem führen.

Der Erfindung lag die Aufgabe zugrunde, eine Armatur zu entwickeln, die durch Schwankungen des im Rohrleitungssystem befindlichen Mediums nicht zum Schwingen angeregt wird. Insbesondere soll durch die zu entwickelnde Armatur die infolge von Resonanz mögliche Verstärkung von Druckschwankungen des Mediums ausgeschlossen werden.

Die Aufgabe wird erfindungsgemäß dadurch gelöst, daß nur eine mechanische Feder vorgesehen ist, zwischen der und dem Absperrelement die Bremse angeordnet ist, deren eines Reibelement aufgrund der hydraulischen Kraft des Mediums einerseits und aufgrund der einzigen Federkraft andererseits in Richtung auf eine das andere Reibelement darstellende Innenwand eines im Armaturengehäuse un zu diesem fest angeordneten Zylinders bewegbar ist zwecks Reibeingriff.

Mit einer derartigen mechanischen Bremse wird zuverlässig verhindert, daß schon kleine Druckschwankungen im Medium das Absperrelement in Schwingungen versetzen. Die erfindungsgemäße Konstruktion arbeitet so, daß die infolge der Reibung entstehende Bremskraft proportional zur einwirkenden Federkraft ist. Hierdurch ist stets eine ausreichende Bremskraft gegeben. Durch Druckschwankungen des Mediums im Rohrleitungssystem bewirkte Schwingungen des Feder-Masse-Systems der Armatur werden selbst im Resonanzpunkt der Armatur verhindert. Dadurch, daß Bremskraft und Federkraft in der erfindungsgemäßen Armatur proportional sind, ist ausgeschlossen, daß im Resonanzpunkt der beweglichen Armaturenteile Schwingungen des Mediums verstärkt werden. Folglich werden Beschädigungen im Rohrleitungssystem, die auf große Druckschwankungen zurückzuführen wären, ausgeschlossen.

Insbesondere wird bei Druckreduzierventilen der Vorteil erzielt, daß eine Übertragung einer Druckschwankung von der Niederdruckseite auf die Hochdruckseite ausgeschlossen ist. Damit ist auch ausgeschlossen, daß auf der Hochdruckseite des Ventiles in den Rohrleitungen extrem hohe Druckschwankungen auftreten, die eine Beschädigung verursachen könnten.

Die erfindungsgemäße mechanische Bremse weist beispielsweise einen einteiligen Spreizring auf, der axial von der Kraft der Feder beaufschlagt radial nach außen verformbar und an die Innenwand des Zylinders anzudrücken ist. Dabei ist die infolge der Reibung des Spreizringes am Zylinder entstehende Bremskraft proportional zur einwirkenden Federkraft.

Der einteilige Spreizring ist beispielsweise geschlitzt, wodurch er besonders gut verformbar ist.

Nach einem anderen Beispiel weist die mechanische Bremse einen mehrteiligen Spreizring auf, dessen Teile in Hubrichtung mit der Feder und mit dem Absperrelement spielfrei in Verbindung stehen. Von der hydraulischen Kraft des Mediums und von der Kraft der Feder beaufschlagt, sind die Teile des mehrteiligen Spreizringes radial nach außen verschiebbar und werden an die Innenwand des Zylinders angedrückt. Auch hierbei ist die infolge der Reibung entstehende Bremskraft proportional zur einwirkenden Federkraft. Mit der Verwendung eines mehrteiligen Spreizringes wird der Vorteil erzielt, daß unbekannte Kräfte in der Bremse, die bei der Verformung eines einteiligen Spreizringes auftreten, ausgeschlossen sind. Die Verschiebung der Spreizringteile nach außen erfolgt mit geringerem Kraftaufwand als die Verformung eines einteiligen Spreizringes.

Der mehrteilige Spreizring ist beispielsweise dreiteilig. Drei Teile sind leicht handhabbar und sind ohne Verkantungen zu verschieben.

Die gesamte mechanische Bremse besteht beispielsweise aus einem Federteller, der mit der Feder zusammenwirkt, aus einem Spreizdorn, der mit dem Absperrelement zusammenwirkt und aus dem Spreizring, der zwischen dem Federteller und dem Spreizdorn angeordnet ist. Die Feder, der Federteller, der Spreizring, der Spreizdorn und das Absperrelement stehen miteinander in Hubrichtung spielfrei in Verbindung. Die Kraft der Feder auf den Federteller und die hydraulische Kraft des Mediums über das Absperrelement auf den Spreizdorn bewirken, daß auf beide Stirnflächen des Spreizringes entgegengesetzte Kräfte einwirken. Dadurch wird der Spreizring, falls er einteilig ist, nach außen verformt. Falls der Spreizring mehrteilig ist, werden die einzelnen Teile nach außen verschoben. Die Verschiebung bzw. die Verformung hängt von den einwirkenden Kräften ab, so daß die infolge der Reibung des Spreizringes an der Innenwand des Zylinders entstehende Bremskraft proportional zur einwirkenden Federkraft ist. Auf diese Weise werden Schwingungen des Absperrelementes verhindert.

Mit der erfindungsgemäßen Armatur wird der Vorteil erzielt, daß schädliche Auswirkungen auf das Rohrleitungssystem infolge von Druckschwankungen, die im Medium auftreten, ausgeschlossen sind.

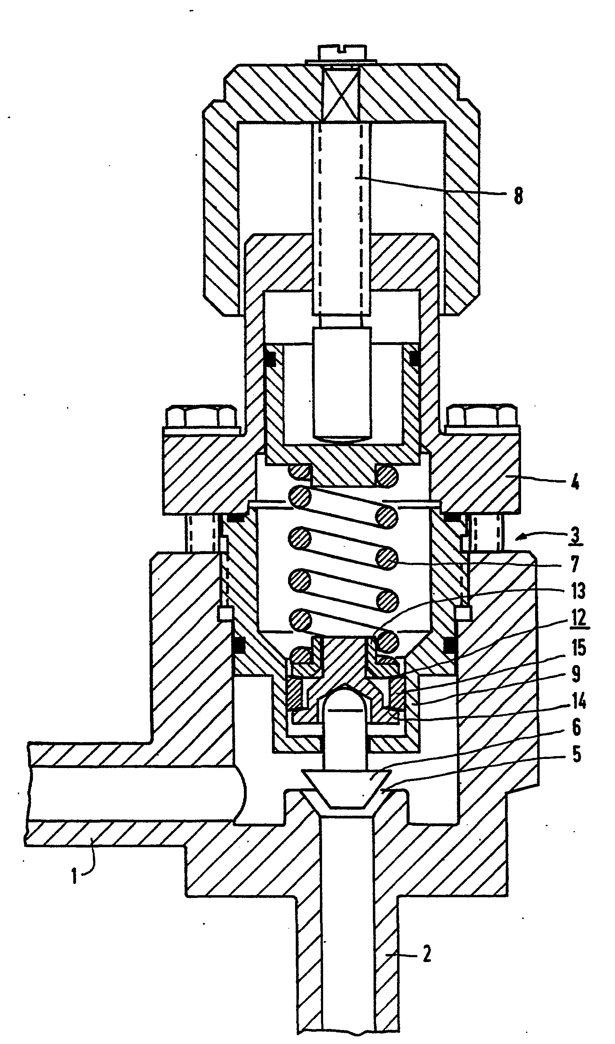

Die Erfindung wird anhand der Zeichnung näher erläutert:

Die Zeichnung zeigt schematisch eine Armatur, die erfindungsgemäß mit einer mechanischen Bremse ausgerüstet ist.

In einem Rohrleitungssystem ist zwischen einer Zuflußleitung 2 und einer Abströmleitung 1 eine Armatur 3 angeordnet. Im Armaturengehäuse 4 der Armatur 3 ist auf einem Sitz 5 aufsetzbar ein Absperrelement 6 angeordnet, das mit einer mechanischen Feder 7 in Verbindung steht. Die Feder 7 bewirkt eine Gegenkraft zur hydraulischen Kraft des Mediums, die auf das Absperrelement 6 einwirkt. Die Vorspannung der Feder 7 ist über eine Spindel 8 regulierbar. Um zu verhindern, daß schon sehr kleine Druckschwankungen im Medium eine Bewegung des Absperrelementes 6 bewirken, ist die Armatur 3 mit einer mechanischen Bremse 12 ausgestattet. Diese ist in einem Zylinder 9 innerhalb des Armaturengehäuses 4 angeordnet. Sie weist einen Federteller 13 auf, der mit der Feder 7 zusammenwirkt, und einen Spreizdorn 14, der mit dem Absperrelement 6 zusammenwirkt. Zwischen dem Federteller 13 und dem Spreizdorn 14 ist ein Spreizring 15 angeordnet. Der Federteller 13, der Spreizring 15 und der Spreizdorn 14 stehen in Hubrichtung spielfrei miteinander in Verbindung. Aufgrund der über das Absperrelement 6 auf den Spreizdorn 14 der mechanischen Bremse 12 einwirkenden hydraulischen Kraft und aufgrund der auf den Federteller 13 einwirkenden Gegenkraft der Feder 7 wird der Spreizring 15 durch den Federteller 13 und den Spreizdorn 14 nach außen gegen die Innenwand des Zylinders 9, der mit dem Armaturengehäuse 4 verbunden ist, gedrückt. Der Spreizring 15 ist dreiteilig ausgebildet, so daß die drei Sektoren auseinandergedrückt werden. Die Bremskraft infolge der Reibung des Spreizringes 15 an der Innenwand des Zylinders 9 ist proportional zur einwirkenden Kraft der Feder 7. Folglich ist ausgeschlossen, daß durch eine geringe Druckschwankung im Medium das System aus Feder 7, mechanischer Bremse 12 und Absperrelement 6 in Schwingungen versetzt wird. Druckschwingungen des Mediums werden nicht aktiv weitergegeben. Sie werden gedämpft. Druckschwankungen, die Beschädigungen an Rohrleitungen und Armaturen bewirken könnten, treten beim Einsatz einer Armatur 3, die mit einer erfindungsgemäßen mechanischen Bremse 12 ausgerüstet ist, nicht auf.

**Patentansprüche**

1. Armatur mit einem Armaturengehäuse (4), zwei Anschlußstutzen für eine Zuflußleitung und für eine Abströmleitung, mit einem auf einen Sitz (5) aufsetzbaren Absperrelement (6), das mit gegen den Mediumdruck wirkenden mechanischen Federmitteln (7) verbunden ist, und mit einer federkraft-betätigten mechanischen Bremse (12), die aus zwei zusammenarbeitenden Reibelementen besteht und die in Hubrichtung spielfrei bewegbar ist wobei die infolge der Reibung entstehende Bremskraft proportional zur einwirkenden Federkraft ist, dadurch gekennzeichnet, daß nur eine mechanische Feder (7) vorgesehen ist, zwischen der und dem Absperrelement (6) die Bremse (12) angeordnet ist, deren eines Reibelement aufgrund der hydraulischen Kraft des Mediums einerseits und aufgrund der einzigen Federkraft andererseits in Richtung auf eine das andere Reibelement darstellende Innenwand eines im Armaturengehäuse (4) und zu diesem fest angeordneten Zylinders (9) bewegbar ist zwecks Reibeingriff.

2. Armatur nach Anspruch 1, dadurch gekennzeichnet, daß das eine Reibelement ein einteiliger Spreizring (15) ist, der mit der Feder (7) und mit dem Absperrelement (6) in Wirkverbindung steht.

3. Armatur nach Anspruch 2, dadurch gekennzeichnet, daß der einteilige Spreizring (15) geschlitzt ist.

4. Armatur nach Anspruch 1, dadurch gekennzeichnet, daß das eine Reibelement ein mehrteiliger Spreizring (15) ist, dessen Teile mit der Feder (7) und mit dem Absperrelement (6) in Wirkverbindung stehen.

5. Armatur nach Anspruch 4, dadurch gekennzeichnet, daß der mehrteilige Spreizring (15) dreiteilig ist.

6. Armatur nach den Ansprüchen 1 bis 5, gekennzeichnet durch einen Federteller (13), der mit der einzigen Feder (7) verbunden ist, einen Spreizdorn (14), der mit dem Absperrelement (6) verbunden ist, und den zwischen dem Federteller (13) und dem Spreizdorn (14) angeordneten Spreizring (15).

**Claims**

1. Fitting with a fitting housing (4), two connecting branches for a supply line and a discharge line, with a shut-off element (6) which can be placed on a seating (5) and which is connected to mechanical spring means (7) acting against the pressure of the medium, and with a mechanical brake (12) actuated by spring force, which mechanical brake (12) consists of two co-operating friction elements and can be moved without play in the lifting direction, the braking force, which occurs as a result of the friction, being proportional to the active spring force, characterised in that one mechanical spring (7) only is provided, the brake (12) being arranged between this spring (7) and the shut-off element (6), the one friction element of this brake (12) being capable, because of the hydraulic force of the medium on the one hand and the sole spring force on the other hand, of moving, for the purpose of friction contact, in the direction of an internal wall, representing the other friction element, of a cylinder (9) which is arranged in, and fixed to, the fitting housing (4).

2. Fitting according to claim 1, characterised in that the one friction element is a one piece expansion ring (15) which is operably connected to the spring (7) and the shut-off element (6).

3. Fitting according to claim 2, characterised in that the one-piece expansion ring (15) is slotted.

4. Fitting according to claim 1, characterised in that the one friction element is a multi-part expansion ring (15), the parts of which are operably connected to the spring (7) and the shut-off element (6).

5. Fitting according to claim 4, characterised in that the multi-part expansion ring (15) is in three parts.

6. Fitting according to claims 1 to 5, characterised by a spring plate (13) which is connected to the single spring (7), an expansion mandrel (14) which is connected to the shut-off element (6), and the expansion ring (15) which is arranged between the spring plate (13) and the expansion mandrel (14).

**Revendications**

1. Clapet comprenant un corps de clapet (4), deux tubulures de raccordement pour un conduit d'entrée et pour un conduit de sortie, un élément obturateur (6) pouvant s'appliquer sur un siège (5) et relié à des moyens mécaniques élastiques (7), antagonistes de la pression du fluide et un frein (12) mécanique actionné par une force élastique, constitué de deux éléments de friction qui coopèrent et mobiles sans jeu dans la direction de la course, la force de freinage créée par le frottement étant proportionnelle à la force élastique appliquée, caractérisé en ce qu'il n'est prévu qu'un ressort (7) mécanique, le frein (12) est monté entre ce ressort et l'élément obturateur (6), et l'un de ses éléments de friction peut, en vue de coopérer par frottement, se déplacer sous l'effet de la force hydraulique du fluide, d'une part, et de la force élastique unique, d'autre part, en direction d'une paroi intérieure, constituant un autre élément de frottement, d'un cylindre (9) disposé dans le corps du clapet (4) et fixé rigidement à celui-ci.

2. Clapet suivant la revendication 1, caractérisé en ce qu'un élément de friction est un anneau d'écartement (15) en une seule pièce, qui coopère avec le ressort (7) et avec l'élément obturateur (6).

3. Clapet suivant la revendication 2, caractérisé en ce que l'anneau d'écartement (15) en une seule pièce est fendu.

4. Clapet suivant la revendication 1, caractérisé en ce que l'élément de friction est un anneau d'écartement (15) en plusieurs parties, dont les parties coopèrent avec le ressort (7) et avec l'élément obturateur (6).

5. Clapet suivant la revendication 4, caractérisé en ce que l'anneau d'écartement (15) en plusieurs parties est en trois parties.

6. Clapet suivant l'une des revendications 1 à 5, caractérisé par une coupelle formant ressort (13) qui est reliée au ressort (7) unique, par un mandrin extensible (14) qui est relié à l'élément obturateur (6) et par l'anneau d'écartement (15) interposé entre la coupelle formant ressort (13) et le mandrin extensible (14).